# EUROPÄISCHE PATENTSCHRIFT

(11) **EP 4 107 020 B1**
(45) Veröffentlichungstag und Bekanntmachung des Hinweises auf die Patenterteilung: **07.08.2024**
(21) Anmeldenummer: 21703706.8
(22) Anmeldetag: 05.02.2021
(51) Int. Cl.: B60K 6/387, F16D 11/10, F16D 25/10

(54) **HYBRID-ANTRIEBSSTRANG FÜR EIN KRAFTFAHRZEUG MIT TRENNELEMENT**
HYBRID DRIVETRAIN FOR A MOTOR VEHICLE WITH SEPARATING ELEMENT
GROUPE MOTOPROPULSEUR HYBRIDE POUR UN VÉHICULE AUTOMOBILE DOTÉ D'UN ÉLÉMENT DE SÉPARATION

(30) Priorität: 19.02.2020 DE 102020202138
(43) Veröffentlichungstag der Anmeldung: 28.12.2022
(73) Patentinhaber: Magna PT B.V. & Co. KG, 74199 Untergruppenbach (DE)
(72) Erfinder: HERDLE, Lothar, 74629 Pfedelbach (DE)
(74) Vertreter: Rausch, Gabriele
(86) Internationale Anmeldenummer: PCT/EP2021/052827
(87) Internationale Veröffentlichungsnummer: WO 2021/165061

(56) Entgegenhaltungen:
- DE-A1- 102009 002 805
- DE-A1- 102016 212 993

## Beschreibung

Die vorliegende Erfindung betrifft einen Hybrid-Antriebsstrang für ein Kraftfahrzeug, wobei der Hybrid-Antriebsstrang einen Verbrennungsmotor, ein Doppelkupplungsgetriebe und eine elektrische Maschine aufweist, wobei das Doppelkupplungsgetriebe eine erste und eine zweite Reibkupplung sowie ein erstes und ein zweites Teilgetriebe aufweist, wobei die elektrische Maschine einem der Teilgetriebe zugeordnet ist, und wobei zwischen den zwei Reibkupplungen und dem Verbrennungsmotor eine dritte Kupplung angeordnet ist.

### Stand der Technik

Hybridisierte Antriebsstränge sind dem Stand der Technik in vielerlei Variationen bekannt geworden. Sie beinhalten ein Getriebe, eine Verbrennungskraftmaschine und eine elektrische Maschine, sodass die jeweilige Antriebsleistung beider Maschinen kombiniert oder separat an den Abtrieb übertragen werden kann.

Ist die elektrische Maschine zwischen der Verbrennungskraftmaschine und dem Getriebe angeordnet oder direkt mit dem Getriebe gekoppelt, können die verbrennungskraftmotorischen Gangstufen von der elektrischen Maschine zumindest teilweise mit genutzt werden.

DE 10 2012 018 416 B4 zeigt in einer solchen Anordnung eine Lastschaltung während des rein elektrischen Betriebs über ein nicht elektrifiziertes Teilgetriebe, was durch Verblocken der Kupplung möglich ist.

Der Verbrennungsmotor muss dabei im unbefeuerten Zustand auf Drehzahl gebracht und während des Schaltvorgangs mitgeschleppt werden, was zu einer Vielzahl an Nachteilen führt. Es kann eine Schädigung des Verbrennungsmotors oder des Katalysators auftreten. Zudem muss die elektrische Maschine Momentenkompensation betreiben. Der Fahrer erwartet während der elektrischen Fahrt keine Geräusche vom Verbrennungsmotor.

Die Regelung ist aufwändig und auch die Anforderung an den Verbrennungsmotor hoch.

Die zusätzliche Massenträgheit des Verbrennungsmotors im Leistungsfluss während des Gangeinlegens kann ein Problem sein.

Daher ist es sinnvoll den Verbrennungsmotor vom Getriebe zu trennen. Die Trennung des Verbrennungsmotors von Rest des Antriebsstrangs ist dabei aus der DE 10 2010 004 711 C5 bekannt. Dazu wird eine dritte Kupplung, die eine Reibkupplung ist, verwendet.

Der Bauraum für eine dritten Kupplung in einem elektrifizierten Antrieb mit Doppelkupplungsgetriebe ist sehr begrenzt und daher ist es wünschenswert eine gut zu integrierende Kupplung zu verwenden. Zudem soll das Mehrgewicht, eine aufwändigere Betätigungsvorrichtung und hohe Schleppmomente im getrennten Zustand vermieden werden.

Aus der EP 2 244 899 B1 ein Hybrid-Antriebsstrang für ein Kraftfahrzeug bekannt, der einen Verbrennungsmotor VM, ein Doppelkupplungsgetriebe und eine elektrische Maschine aufweist, wobei das Doppelkupplungsgetriebe eine erste und eine zweite Reibkupplung sowie ein erstes und ein zweites Teilgetriebe aufweist, wobei die elektrische Maschine einem der Teilgetriebe zugeordnet ist, wobei zwischen den zwei Reibkupplungen und dem Verbrennungsmotor eine dritte Kupplung angeordnet ist, und wobei die dritte Kupplung ein Trennelement ist, das radial zwischen einem Zweimassenschwungrad und der Kupplungseingangsnabe angebracht ist.

DE 10 2016 212 993 A1 zeigt ein Hybridmodul und den das Hybridmodul umfassenden Antriebsstrang. Das Hybridmodul umfasst einen Dämpfer, der auch als Zweimassenschwungrad ausgestaltet sein kann. Die Abtriebsseite des Dämpfers ist mit einem antriebsseitigen Modul der ersten Kopplungseinrichtung mechanisch verbunden. Des Weiteren ist die Abtriebsseite des Dämpfers mit einem antriebsseitigen Modul der zweiten Kopplungseinrichtung verbunden. Das abtriebsseitige Modul der ersten Kopplungseinrichtung ist drehfest mit dem Rotor der elektrischen Maschine verbunden. Der Rotor ist abtriebsseitig mit der ersten Kupplung sowie der zweiten Kupplung des Doppelkupplungsgetriebes verbunden. Die erste Kupplung wirkt auf die ihr zugeordneten Gänge sowie die erste Welle. Die zweite Kupplung wirkt auf die ihr zugeordneten Gänge und auf die zweite Welle. Die erste Welle und die zweite Welle weisen einen gemeinsamen Abtrieb auf. Die erste Welle ist die Antriebswelle des ersten Teilgetriebes, und die zweite Welle ist die Antriebswelle des zweiten Teilgetriebes des Doppelkupplungsgetriebes.

DE 10 2009 002 805 A1 zeigt ein Fahrzeuggetriebe, das über eine Getriebeausgangswelle mit Antriebsrädern verbunden ist, ferner eine mit der Getriebeeingangswelle des Fahrzeuggetriebes permanent antriebsverbundene Elektromaschine und einen Verbrennungsmotor, welche über eine Kupplungsanordnung der Getriebeeingangswelle Kuppelbau bzw. von dieser ankoppelbar ist. Dem Verbrennungsmotor antriebstechnisch nachgeordnet ist ein als Zweimassenschwungrad ausgebildeter Torsionsschwingungsdämpfer zur Schwingungsdämpfung im Antriebsstrang verbaut.

Es ist Aufgabe der Erfindung, ein Trennelement als dritte Kuppelung bereitzustellen, um die Probleme zu lösen.

### Kurze Beschreibung der Erfindung

Die Aufgabe wird gelöst mit einem Hybrid-Antriebsstrang für ein Kraftfahrzeug, wobei der Hybrid-Antriebsstrang einen Verbrennungsmotor, ein Doppelkupplungsgetriebe und eine elektrische Maschine aufweist, wobei das Doppelkupplungsgetriebe eine erste und eine zweite Reibkupplung sowie ein erstes und ein zweites Teilgetriebe aufweist, wobei die elektrische Maschine einem der Teilgetriebe zugeordnet ist, und wobei zwischen den zwei Reibkupplungen und dem Verbrennungsmotor eine dritte Kupplung angeordnet ist, wobei die dritte Kupplung ein Trennelement ist, das an der Kupplungseingangsnabe der Doppelkupplung radial zwischen einem Zweimassenschwungrad oder einem anderen Verbindungselement zum Verbrennungsmotor und der Kupplungseingangsnabe angebracht ist.

Die radiale Anordnung bedeutet, dass von der Mittenachse aus gesehen zunächst die Kupplungseingangsnabe, dann das Trennelement und dann das Verbindungselement angeordnet ist.

Durch die Anordnung des Trennelements ist eine sehr kompakte Bauweise unter Verwendung von wenig Bauraum möglich.

Es ist dabei von Vorteil, dass das Trennelement durch axiales Verschieben einer Schalthülse in Ausnehmungen der Kupplungseingangsnabe und Ausnehmungen einer Hülse, die mit dem Zweimassenschwungrad drehfest verbunden ist, aus seiner normal geschlossenen Stellung in eine geöffnete Stellung verschiebbar ist.

Vorteilhafterweise weist die Schalthülse Außensteckverzahnungen und Innensteckverzahnungen auf, die in entsprechende Steckverzahnungen der Hülse und der Kupplungseingangsnabe eingreifen.

Durch die Verwendung von Steckverzahnungen wird ebenfalls Bauraum eingespart.

Es ist dabei von Vorteil, dass die Schalthülse über eine Schaltstange, die entlang einer der Wellen der Kupplungsanordnung geführt wird, betätigbar ist.

Durch die einfache axiale Bewegung ist der Betätigungsvorgang optimiert und die Betätigung auf einfache Art und Weise möglich.

Zur Betätigung des Trennelements dient eine Schaltgabel oder ein Schaltfinger. Diese können über eine Schaltwalze oder hydraulisch bewegt werden, wobei in einer Ausführungsform die Schaltwalze dem nicht elektrifizierten Teilgetriebe zugeordnet ist.

Vorteilhafterweise sind die Ausnehmungen der Kupplungseingangsnabe und Ausnehmungen der Hülse am Innenumfang der Hülse und der Kupplungseingangsnabe radial gleichmäßig verteilt angeordnet.

### Ausführungsbeispiel der Erfindung

Ausführungsbeispiele der Erfindung sind in der Zeichnung dargestellt und werden in der nachfolgenden Beschreibung näher erläutert. Es zeigen:
- Fig. 1:: einen hybridisierten Antriebsstrang im Stand der Technik,
- Fig. 2:: eine schematische Längsschnittansicht durch eine Ausführungsform einer Doppelkupplung mit Trennelement im geschlossenen Zustand,
- Fig. 3:: eine schematische Schnittansicht eines Trennelements im geöffneten Zustand,

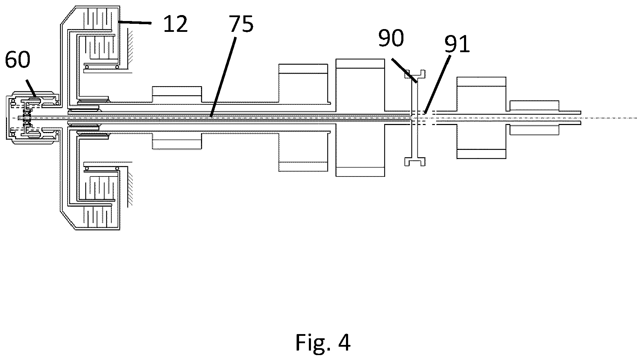

- Fig. 4:: einen Längsschnitt durch die Antriebswellen des Doppelkupplungsgetriebes in einer Ausführungsform mit der Durchführung der Schaltstange zur Schaltmuffe.

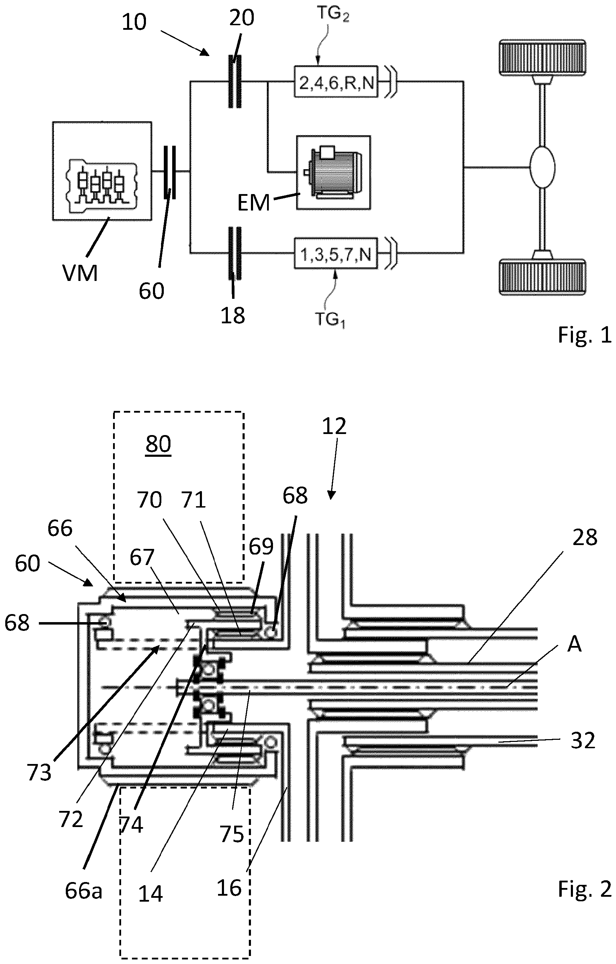

In Fig. 1 ist ein Antriebsstrang für ein Kraftfahrzeug mit Doppelkupplungsgetriebe in elektrifizierter Form schematisch dargestellt. Ein solcher Aufbau eines Antriebs mit drei Kupplungen ist in der DE 10 2010 004 711 C5 beschrieben.

In Figur 2 ist ein Ausschnitt aus einer beispielhaften Doppelkupplung mit einem Trennelement 60 dargestellt. Die Figur ist eine Schnittdarstellung. wobei das erfindungsgemäße Trennelement symmetrisch zu der Mittenachse A dargestellt ist.

Der Antriebsstrang 10 beinhaltet eine Kupplungsanordnung 12. Die Kupplungsanordnung 12 weist eine Primärseite 16 mit einer Kupplungseingangsnabe 14 auf. Die Primärseite 16 kann mit einem Verbrennungsmotor VM verbunden sein.

Die Kupplungsanordnung 12 beinhaltet eine erste Kupplung 18 und eine zweite Kupplung 20. Die Kupplungen 18, 20 sind als nasslaufende Lamellenkupplungen ausgebildet und radial ineinander verschachtelt.

Die erste Kupplung 18 weist ein erstes Ausgangsglied auf. Das erste Ausgangsglied ist mit einer ersten Ausgangswelle 28 verbunden, die beispielsweise mit einem ersten Teilgetriebe eines Doppelkupplungsgetriebes verbunden sein kann.

Die zweite Kupplung 20 weist ein zweites Ausgangsglied auf. Das zweite Ausgangsglied ist mit einer zweiten Ausgangswelle 32 verbunden. Die zweite Ausgangswelle 32 kann als Hohlwelle koaxial zu der ersten Ausgangswelle 28 angeordnet und mit einem zweiten Teilgetriebe eines Doppelkupplungsgetriebes verbunden werden.

Das Trennelement 60 ist an der Kupplungseingangsnabe 14 angeordnet, und stellt den Kraftfluss zwischen einem Zweimassenschwungrad 80 des Verbrennungsmotors und der Kupplungsanordnung 12 her. Das Zweimassenschwungrad 80 ist in der Zeichnung nur schematisch als gestricheltes Rechteck angedeutet. Das Zweimassenschwungrad ist nur eine Möglichkeit der Anbindung des Verbrennungsmotors. Es könne auch andere verbindungs- und Dämpfungselemente wie eine Flexplate verbaut sein.

Eine Hülse 66 umfasst die Kupplungseingangsnabe 14. Die Hülse 66 weist auf ihrem Außenumfang eine Verzahnung 66a auf, über die die Hülse 66 an dem Zweimassenschwungrad 80 angebunden ist. Alternativ ist jede andere Anbindung der Zweimassenschwungrads 80 an die Hülse 66 möglich. Die sich drehende Hülse 66 weist in ihrem Innenumfang einen Ausnehmung 67 mit einer Innen-Steckverzahnung 70 auf. Die Hülse 66 sitzt über Wälzlager 68 auf dem Außenumfang der Kupplungseingangsnabe 14 auf, wobei die Kupplungseingangsnabe 14 ebenfalls einen Steckverzahnung, die Außen-Steckverzahnung 71 trägt.

Im Inneren der Kupplungseingangsnabe 14 ist das eigentliche Schaltelement, die Schalthülse 69 angeordnet. Die Schalthülse 69 besitzt eine Außen- und Innen-Steckverzahnung, die jeweils in die korrespondierende Steckverzahnung der Kupplungseingangsnabe 14 und der Hülse 66 eingreifen kann.

Die Schalthülse 69 wird von einem Schaltfinger 72 in Richtung der Wellenachsen A bewegt. Es ist dabei mindestens ein Schaltfinger 72 vorgesehen, der in eine Ausnehmung 73 an der Kupplungseingangsnabe 14 eingreift. Um die Kraft optimal zu übertragen sieht man mehrere Ausnehmungen 73 entlang des Umfangs der Kupplungseingangsnabe 14 vor. Beispielsweise wählt man 3 Ausnehmungen, die sich gleichmäßig am Umfang der Kupplungseingangsnabe 14 verteilen.

Die Schaltfinger 72 greifen in diese Ausnehmungen ein. Die Schaltfinger 72 bewegen die Schalthülse 69 in axialer Richtung.

Die Schaltfinger 72 sind über einen radialen Steg 74 in Form von Stiften mit einer Schaltstange 75 verbunden. Die Schaltstange 75 überträgt eine axiale Bewegung der Schaltstange 75 auf den Schaltfinger 72 und somit auf die Schalthülse 69.

Die axiale Bewegung der Schaltstange 75 wird im Ausführungsbeispiel durch die Betätigung einer Schaltwalze, die in der Figur nicht dargestellt ist, ausgelöst. Die Schaltstange 75 wird entlang einer der Ausgangswellen, in diesem Fall die erste Ausgangswelle 28 geführt.

In der Figur 2 ist das Trennelement 60 in einer Stellung dargestellt, in der die Getriebeeingangsseite der Kupplungsanordnung 12 mit dem Zweimassenschwungrad 80 und somit mit dem Verbrennungsmotor VM verbunden ist. Die Schalthülse 69 ist in der Darstellung nach rechts axial verschoben und befindet sich in Eingriff mit der jeweiligen Steckverzahnung an der Hülse 66 und der Kupplungseingangsnabe 14.

In dieser Position wird die Kraft des Verbrennungsmotors VM auf das Getriebe übertragen.

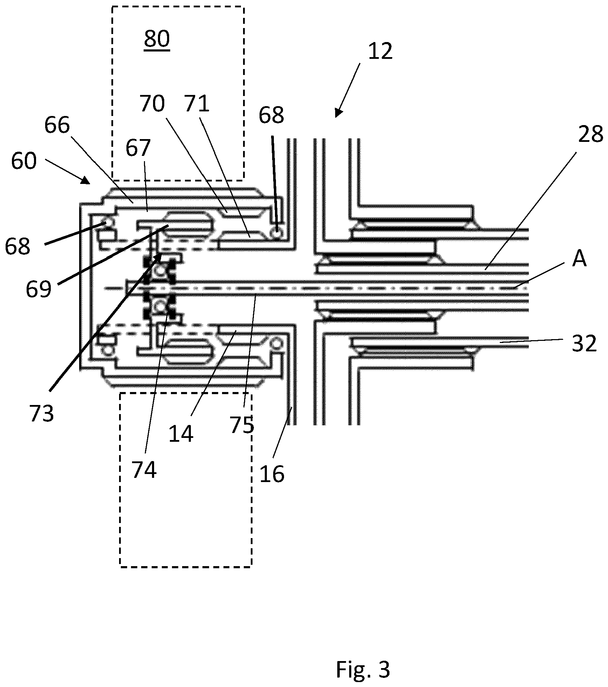

In der Figur 3 ist die Schaltposition dargestellt, wenn die Getriebeeingangsseite vom Zweimassenschwungrad 80 getrennt ist.

Die Schalthülse 69 ist in der Figur nach links verschoben und die Steckverzahnungen der Schalthülse 69 sind nicht mehr mit der Steckverzahnung der Hülse 66 und der Kupplungseingangsnabe 14 verbunden.

In Figur 3 ist dargestellt, dass die Schaltstange 75 in der Vollwelle, der ersten Ausgangswelle 28 geführt ist und mit einer gehäusefesten aber linear beweglichen Schaltmuffe 90 verbunden ist. Dies Schaltmuffe 90 erlaubt die eine einfache Verbindung der Schaltstange über Aussparungen 91 an der Außenseite der inneren Ausgangswelle 28. Das mitdrehende Element, nämlich die Schaltstange, kann über eine linear bewegliche Mechanik verstellt werden.

Das Trennelement 60 kann für unterschiedliche Fahrsituationen des Antriebsstranges eingesetzt werden.

Eine Betätigung des Trennelements 60 ist zu Beginn des rein elektrischen Fahrbetriebs möglich, um die Verbrennungsmotor VM nicht mitschleppen zu müssen.

Die Betätigung des Trennelements 60 kann für einen problemlosen elektrischen Lastschaltungsvorgang verwendet werden. Das Wiederankoppeln erfolgt bei einem Moduswechsel von rein elektrischem Fahren zu einem verbrennungsmotorischen Betrieb.

In beiden Fällen kann das nicht elektrifiziertes Teilgetriebe TG1 auf neutral stehen.

Die zugehörige Schaltwalze wird dann für dieses nicht elektrifizierte Teilgetriebe nicht benutzt. Daher kann diese Schaltwalze die Schaltung des Trennelements 60 übernehmen. Beispielsweise ist das Betätigen des Trennelements über die Schaltwalze nach dem 7. Gang denkbar.

Die Schaltwalze kann dabei das Trennelement 60 trennen beim Durchfahren der Schaltwalze vom Anschlag der Schaltwalze in Richtung 7. Gang und koppeln beim Durchfahren der Schaltwalze von 7. Gang in Richtung Anschlag.

Alternativ kann die Betätigung des Trennelements 60 auch über eine Schaltwalze des zweiten Teilgetriebes TG2 erfolgen.

Eine weitere Alternative besteht darin, das Trennelement 60 über einen linear wirkenden Aktuator der hydraulisch oder elektrisch betrieben ist, zu betätigen.

## Patentansprüche

1. Hybrid-Antriebsstrang für ein Kraftfahrzeug, wobei der Hybrid-Antriebsstrang (10) einen Verbrennungsmotor (VM), ein Doppelkupplungsgetriebe und eine elektrische Maschine (EM) aufweist, wobei das Doppelkupplungsgetriebe eine erste und eine zweite Reibkupplung (20, 18) sowie ein erstes und ein zweites Teilgetriebe (TG1, TG2) aufweist, wobei die elektrische Maschine (EM) einem der Teilgetriebe (TG1, TG2) zugeordnet ist, und wobei zwischen den zwei Reibkupplungen (18, 20) und dem Verbrennungsmotor (VM) eine dritte Kupplung angeordnet ist, wobei die dritte Kupplung ein Trennelement (60) ist, das an der Kupplungseingangsnabe (14) der Doppelkupplung (12) radial zwischen einem Zweimassenschwungrad (80) oder einem anderen Verbindungselement zum Verbrennungsmotor(VM) und der Kupplungseingangsnabe (14) angebracht ist, **dadurch gekennzeichnet, dass** das Trennelement (60) durch axiales Verschieben einer Schalthülse (69) in Ausnehmungen (73) der Kupplungseingangsnabe (14) und Ausnehmungen (67) einer Hülse (66), die mit dem Zweimassenschwungrad (80) oder einem anderen Verbindungselement drehfest verbunden ist, aus seiner normal geschlossenen Stellung in eine geöffnete Stellung verschiebbar ist..

2. Hybrid-Antriebsstrang für ein Kraftfahrzeug nach Anspruch 1, **dadurch gekennzeichnet, dass** die Schalthülse (69) Außensteckverzahnungen und Innensteckverzahnungen aufweist, die in entsprechende Steckverzahnungen (70, 71) der Hülse (60) und der Kupplungseingangsnabe (14) eingreifen.

3. Hybrid-Antriebsstrang für ein Kraftfahrzeug nach Anspruch 2, **dadurch gekennzeichnet, dass** die Schalthülse (69) über eine Schaltstange (75), die entlang einer der Wellen der Kupplungsanordnung geführt wird, betätigbar ist.

4. Hybrid-Antriebsstrang für ein Kraftfahrzeug nach Anspruch 3, **dadurch gekennzeichnet, dass** die Betätigung des Trennelements (60) über eine lineare Bewegung einer Schaltmuffe (90) erfolgt, wobei sie über eine Schaltgabel oder einen Schaltfinger betätigbar ist, der drehfest aber linear verschieblich im Gehäuse gelagert ist.

5. Hybrid-Antriebsstrang für ein Kraftfahrzeug nach Anspruch 4, **dadurch gekennzeichnet, dass** die Schaltmuffe (90) über eine Aussparung (91) einer der Wellen der Kupplungsanordnung mit der Schaltstange (75) verbunden und über eine Schaltwalze oder einen Aktuator betätigbar ist.

6. Hybrid-Antriebsstrang für ein Kraftfahrzeug nach einem der Ansprüche 1-5, **dadurch gekennzeichnet, dass** die Ausnehmungen (73) der Kupplungseingangsnabe (14) und Ausnehmungen (67) der Hülse (66) am Innenumfang der Hülse (69) und der Kupplungseingangsnabe (14) radial gleichmäßig verteilt angeordnet sind.

7. Hybrid-Antriebsstrang für ein Kraftfahrzeug nach Anspruch 5, **dadurch gekennzeichnet, dass** die Schaltwalze dem nicht elektrifizierten Teilgetriebe zugeordnet ist.

8. Hybrid-Antriebsstrang für ein Kraftfahrzeug nach Anspruch 5, **dadurch gekennzeichnet, dass** die Schaltwalze dem elektrifizierten Teilgetriebe zugeordnet ist.

## Claims

1. Hybrid drivetrain for a motor vehicle, wherein the hybrid drivetrain (10) has an internal combustion engine (VM), a dual clutch transmission and an electric machine (EM), wherein the dual clutch transmission has a first and a second friction clutch (20, 18) as well as a first and a second sub-transmission (TG1, TG2), wherein the electric machine (EM) is assigned to one of the sub-transmissions (TG1, TG2), and wherein a third clutch is disposed between the two friction clutches (18, 20) and the internal combustion engine (VM), wherein the third clutch is a separating element (60) which is attached to the clutch input hub (14) of the dual clutch (12) so as to be radially between a dual mass flywheel (80) or another connecting element to the internal combustion engine (VM) and the clutch input hub (14), **characterized in that** the separating element (60) is displaceable from its normal closed position to an opened position by axially displacing a shift sleeve (69) in clearances (73) of the clutch input hub (14) and clearances (67) of a sleeve (66) which is co-rotationally connected to the dual mass flywheel (80) or another connecting element.

2. Hybrid drivetrain for a motor vehicle according to Claim 1, **characterized in that** the shift sleeve (69) has external splines and internal splines which engage in corresponding splines (70, 71) of the sleeve (60) and of the clutch input hub (14).

3. Hybrid drivetrain for a motor vehicle according to Claim 2, **characterized in that** the shift sleeve (69) is activatable via a selector rod (75) which runs along one of the shafts of the clutch assembly.

4. Hybrid drivetrain for a motor vehicle according to Claim 3, **characterized in that** the activation of the separating element (60) is performed by way of a linear movement of a shift collar (90), whereby the latter is activatable via a shift fork or a shift finger which is mounted so as to be co-rotational yet linearly displaceable in the housing.

5. Hybrid drivetrain for a motor vehicle according to Claim 4, **characterized in that** the shift collar (90) is connected to the selector rod (75) by way of a clearance (91) of one of the shafts of the clutch assembly, and is activatable via a selector roller or an actuator.

6. Hybrid drivetrain for a motor vehicle according to one of Claims 1 to 5, **characterized in that** the clearances (73) of the clutch input hub (14) and clearances (67) of the sleeve (66) are radially disposed so as to be distributed uniformly on the internal circumference of the sleeve (69) and of the clutch input hub (14).

7. Hybrid drivetrain for a motor vehicle according to Claim 5, **characterized in that** the selector roller is assigned to the non-electrified sub-transmission.

8. Hybrid drivetrain for a motor vehicle according to Claim 5, **characterized in that** the selector roller is assigned to the electrified sub-transmission.

## Revendications

1. Groupe motopropulseur hybride pour un véhicule automobile, le groupe motopropulseur hybride (10) présentant un moteur à combustion interne (VM), une transmission à embrayage double et une machine électrique (EM), la transmission à embrayage double présentant un premier et un deuxième embrayage à friction (20, 18) ainsi qu'une première et une deuxième transmission partielle (TG1, TG2), la machine électrique (EM) étant associée à l'une des transmissions partielles (TG1, TG2), et un troisième embrayage étant disposé entre les deux embrayages à friction (18, 20) et le moteur à combustion interne (VM), le troisième embrayage étant un élément de séparation (60) qui est monté sur le moyeu d'entrée d'embrayage (14) de l'embrayage double (12) radialement entre un volant d'inertie à deux masses (80) ou un autre élément de liaison par rapport au moteur à combustion interne (VM) et au moyeu d'entrée d'embrayage (14), **caractérisé en ce que** l'élément de séparation (60) est déplaçable d'une position normalement fermée à une position ouverte par un déplacement axial d'une douille de changement de vitesses (69) dans des évidements (73) du moyeu d'entrée d'embrayage (14) et des évidements (67) d'une douille (66) qui est reliée de manière solidaire en rotation au volant d'inertie à deux masses (80) ou à un autre élément de liaison.

2. Groupe motopropulseur hybride pour un véhicule automobile selon la revendication 1, **caractérisé en ce que** la douille de changement de vitesses (69) présente des cannelures extérieures et des cannelures intérieures qui s'engrènent dans des cannelures (70, 71) correspondantes de la douille (60) et du moyeu d'entrée d'embrayage (14).

3. Groupe motopropulseur hybride pour un véhicule automobile selon la revendication 2, **caractérisé en ce que** la douille de changement de vitesses (69) peut être actionnée par le biais d'une tige de changement de vitesses (75) qui est guidée le long de l'un des arbres de l'ensemble d'embrayages.

4. Groupe motopropulseur hybride pour un véhicule automobile selon la revendication 3, **caractérisé en ce que** l'actionnement de l'élément de séparation (60) s'effectue par le biais d'un mouvement linéaire d'une bague de changement de vitesses (90), celle-ci pouvant être actionnée par le biais d'une fourchette de changement de vitesses ou d'un doigt de changement de vitesses, qui est monté(e) dans le carter de manière bloquée en rotation mais déplaçable linéairement.

5. Groupe motopropulseur hybride pour un véhicule automobile selon la revendication 4, **caractérisé en ce que** la bague de changement de vitesses (90) est reliée à la tige de changement de vitesses (75) par le biais d'une cavité (91) de l'un des arbres de l'ensemble d'embrayages et peut être actionnée par le biais d'un tambour de changement de vitesses ou d'un actionneur

6. Groupe motopropulseur hybride pour un véhicule automobile selon l'une des revendications 1 à 5, **caractérisé en ce que** les évidements (73) du moyeu d'entrée d'embrayage (14) et les évidements (67) de la douille (66) sont disposés de manière répartie uniformément radialement à la périphérie intérieure de la douille (69) et du moyeu d'entrée d'embrayage (14).

7. Groupe motopropulseur hybride pour un véhicule automobile selon la revendication 5, **caractérisé en ce que** le tambour de changement de vitesses est associé à la transmission partielle non électrifiée.

8. Groupe motopropulseur hybride pour un véhicule automobile selon la revendication 5, **caractérisé en ce que** le tambour de changement de vitesses est associé à la transmission partielle électrifiée.
